(19) **Europäisches Patentamt / European Patent Office / Office européen des brevets**

(11) **EP 3 957 668 A1**

(12) # EUROPEAN PATENT APPLICATION
published in accordance with Art. 153(4) EPC

(43) Date of publication:
**23.02.2022 Bulletin 2022/08**

(21) Application number: **20791132.2**

(22) Date of filing: **19.03.2020**

(51) International Patent Classification (IPC):
**C08G 18/42** *(2006.01)*     **C08G 18/08** *(2006.01)*
**C08L 75/04** *(2006.01)*

(52) Cooperative Patent Classification (CPC):
**C08G 18/08; C08G 18/42; C08L 75/04**

(86) International application number:
**PCT/KR2020/003784**

(87) International publication number:
**WO 2020/213841 (22.10.2020 Gazette 2020/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **16.04.2019   KR 20190044265**
         **16.03.2020   KR 20200032165**

(71) Applicant: **Dongsung Chemical Co., Ltd.**
**Busan 49421 (KR)**

(72) Inventors:
• **KWON, Daeyoung**
  **Ulju-gun, Ulsan 44905 (KR)**
• **PARK, Jaerok**
  **Ulju-gun, Ulsan 44905 (KR)**
• **LEE, Jaechan**
  **Ulju-gun, Ulsan 44905 (KR)**
• **KIM, Minkon**
  **Ulju-gun, Ulsan 44905 (KR)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **THERMOPLASTIC POLYURETHANE COMPOSITION FOR CAR INTERIOR SURFACE MATERIAL, AND PREPARATION METHOD THEREFOR**

(57)   The present invention relates to a thermoplastic polyurethane composition for a vehicle interior surface material and a method for manufacturing the same, where the thermoplastic polyurethane composition for a vehicle interior surface material may be manufactured into a vehicle interior surface material that has excellent processing workability such as demolding properties, has a short molding process time, and has excellent scratch resistance, life-scratch resistance (nail), whitening resistance (non-blooming performance), abrasion resistance, appearance quality, moldability, and durability.

**EP 3 957 668 A1**

**Description**

**[TECHNICAL FIELD]**

The present invention relates to a thermoplastic polyurethane composition for a vehicle interior surface material and a method for manufacturing the same.

**[DISCUSSION OF RELATED ART]**

Among vehicle (e.g., car, automobile, etc.) interior materials, a surface material of a crash pad, a door trim, and a console box is a part that may provide the user with the sense of emotion nearby. However, conventionally known surface materials for vehicle interior materials may not be excellent in terms of emotional qualities including, for example, smell, touch, and appearance quality, and may be poor in terms of scratch resistance and durability against UV rays, heat, and humidity in the air in the long term, while not allowing good deployment for invisible passenger air-bags.

Korean Patent No. 10-0508655 discloses a thermoplastic polyurethane surface material made of an ether-including polyester polyol, a method for manufacturing the same, and a molded product using the same. However, although the thermoplastic polyurethane surface material has all of emotional quality, durability, and invisible passenger airbag deployment performance, it is vulnerable to life-scratch properties (nails, etc.).

In addition, Korean Patent No. 10-0493231 discloses a composition for improving scratch resistance of TPU for instrument panels. However, the composition has a disadvantage in that scratch resistance and abrasion resistance performance are degraded over time due to external migration to a foam outside or inside a surface material. Accordingly, in the instrument panel formed of such a composition, the material melts by frictional heat, thus causing gloss and resulting in gloss deviation. In addition, the instrument panel formed of such a composition has a blooming phenomenon on the surface after a long period of time, making it difficult to maintain the appearance quality of the vehicle in the long term.

Meanwhile, along with thermoplastic polyurethane, PVC (Poly Vinyl Chloride) is most often applied to a powder slush molding method. PVC has excellent scratch resistance, but has poor long-term durability (especially, increased hardness due to plasticizer migration), low odor grade, and poor airbag deployment performance at low temperatures due to high glass transition temperature (Tg).

In addition, TPO (thermoplastic olefin) is also known as a material for the surface material for vehicle interior materials. The TPO surface material formed by a vacuum molding method has improved scratch resistance through a painting process, but the design freedom is low due to the nature of the vacuum molding method, and the embossing implementation is poor, so the appearance quality is low.

**[DETAILED DESCRIPTION OF THE INVENTION]**

**[TECHNICAL OBJECTIVES]**

The present invention is directed to a thermoplastic polyurethane composition capable of being manufactured into a molded product that has excellent scratch resistance and life scratch resistance (nails) as well as abrasion resistance, durability, appearance quality, moldability, emotional quality, airbag deployment performance, and safety performance, and to a method for preparing the thermoplastic polyurethane composition.

The present invention is also directed to a molded product manufactured by using the thermoplastic polyurethane composition reduced in terms of a molding process time to have increase productivity, achieving cost reduction, enhancing fuel efficiency of vehicles, and having excellent appearance quality and excellent appearance retention without blooming in the long term.

[TECHNICAL SOLUTION TO THE PROBLEM]

According to an embodiment, a thermoplastic polyurethane composition for a vehicle interior surface material includes: a polyol including a polyester polyol; a diisocyanate; and an aromatic chain extender, wherein the aromatic chain extender includes at least one selected from the group consisting of hydroquinone bis(2-hydroxyethyl) ether (HQEE) and hydroxyethyl resorcinol (HER).

In some embodiments, the thermoplastic polyurethane composition for a vehicle interior surface material may include, with respect to 100 parts by weight of the polyol, 10 to 95 parts by weight of the diisocyanate, and 5 to 35 parts by weight of the aromatic chain extender.

According to an embodiment, a method for preparing a thermoplastic polyurethane composition for a vehicle interior surface material includes: polymerizing a thermoplastic polyurethane by polymerizing a polyol including a polyester polyol, a diisocyanate, and an aromatic chain extender; aging the thermoplastic polyurethane; pulverizing the aged thermoplastic polyurethane; and adding an additive to the pulverized thermoplastic polyurethane and then performing extrusion.

**[EFFECTS OF THE INVENTION]**

According to one or more embodiments of the present invention, the thermoplastic polyurethane composition may be manufactured into a molded product, e.g., a surface material for vehicle interior materials that has excellent scratch resistance and life scratch resistance (nail), as well as abrasion resistance, durability (e.g., heat aging resistance, light aging resistance, moisture aging resistance, etc.), appearance quality, moldability, emotional quality (e.g., surface touch feeling, embossing quality, etc.), airbag deployment performance, and safety performance (e.g., fogging, etc.).

In addition, according to one or more embodiments of the present invention, the thermoplastic polyurethane composition not only increases productivity by shortening the molding process time, but also has excellent demolding properties to reduce an application amount and a cycle of a mold release agent and excellent shape retention properties during demolding and storage.

In addition, according to one or more embodiments of the present invention, since the thermoplastic polyurethane composition may be formed into a thin film, it is possible to realize cost reduction by weight reduction and enhance fuel efficiency of vehicles.

In addition, according to one or more embodiments of the present invention, the thermoplastic polyurethane composition may be manufactured into a molded product having excellent appearance quality and appearance retention properties without blooming in the long term.

**[DETAILED DESCRIPTION OF THE INVENTION]**

Hereinafter, the present invention will be described.

In general, thermoplastic polyurethane (TPU) is a crystalline resin including, for example, a non-crystalline moiety (e.g., portion), and has sticky properties. Due to such characteristics, when manufacturing a molded product using such a thermoplastic polyurethane, the TPU molded product is not easily demolded from a mold, thereby reducing process workability.

In order to improve the process workability, thermoplastic polyurethane compositions in which various internal and external lubricants are applied to a thermoplastic polyurethane are in use. A silicone-based additive, particularly a polydimethylsiloxane (PDMS)-based additive, is largely used.

The polydimethylsiloxane-based additive is excellent in improving process workability of the thermoplastic polyurethane, as well as improving abrasion resistance and scratch resistance of a final molded product. However, it was difficult for the polydimethylsiloxane-based additive to maintain a uniform distribution state in a matrix of the thermoplastic polyurethane (TPU). In addition, when certain conditions, such as high humidity, are not satisfied, the polydimethylsiloxane-based additive may not be secured to the thermoplastic polyurethane matrix and may migrate to the surface.

Accordingly, in the present invention, a thermoplastic polyurethane composition may include a polyol, a diisocyanate and an aromatic chain extender, where the polyol includes a polyester polyol, and the aromatic chain extender includes at least one selected from the group consisting of hydroquinone bis(2-hydroxyethyl) ether (HQEE) and hydroxyethyl resorcinol (HER).

Accordingly, the thermoplastic polyurethane composition according to the present invention has high crystallinity although a polydimethylsiloxane-based additive is not added, and thus it is possible to shorten the processing time in a molding process. In addition, according to the present invention, the thermoplastic polyurethane composition has excellent demolding properties and thus a coating amount and a cycle of a mold release agent may be reduced, and the thermoplastic polyurethane composition has excellent shape retention properties during demolding and temporary storage of the molded products (e.g., surface material for vehicle interior materials) and thus wrinkling of molded products may be substantially prevented.

In addition, since the thermoplastic polyurethane composition of the present invention has high crystallinity and high melting point, it is possible to manufacture a molded product, e.g., a surface material for a vehicle interior material, that is excellent in scratch resistance and life scratch resistance (nail), as well as abrasion resistance, durability (e.g., heat aging resistance, light aging resistance, moisture aging resistance, etc.), appearance quality, moldability, emotional quality (e.g., surface touch feeling, embossing quality, etc.), airbag deployment performance, and safety performance (e.g., fogging, etc.).

In addition, since the thermoplastic polyurethane composition according to the present invention has high crystallinity, it may be formed into a thin film when molded according to a powder slush molding (PSM) method, and accordingly, it is possible to realize cost reduction and enhancement of fuel efficiency of the vehicle by weight reduction.

In addition, although the thermoplastic polyurethane composition according to the present invention, dissimilar to the conventional thermoplastic polyurethane composition, does contain a conventional crystalline isocyanate such as hexamethylene diisocyanate, the blooming phenomenon may not occur, and thus it is possible to manufacture a molded product having excellent appearance quality and appearance retention properties in the long term.

Hereinafter, each component of the thermoplastic polyurethane composition according to the present invention will be described.

(a) Polyol

The thermoplastic polyurethane composition according to the present invention includes a polyol. The polyol is a material constituting a soft segment of the thermoplastic polyurethane and includes a polyester polyol.

The polyester polyol may be a polyester diol having a number average molecular weight in a range of 500 to 7,000 g/mol. If the number average molecular weight of the polyester polyol is less than 500 g/mol, a molecular weight is low, and accordingly, it may serve as a hard segment rather than a soft segment, thus increasing hardness, which may lead to degradation of emotional quality. On the other hand, when the number average molecular weight of the polyester polyol exceeds 7,000 g/mol, viscosity of the polyol itself increases, making it difficult to handle raw materials before TPU preparing, and it is difficult to mix evenly with a chain extender and an isocyanate in a polymerization process, such that variations in degree of polymerization may occur within one batch.

In addition, the polyester polyol may be a polyester polyol including, for example, an ether group in a chain structure (hereinafter, an "ether group-including polyester polyol"), specifically, an ether group-including polyester diol. When the polyol of the present invention includes an ether group-including polyester polyol, hydrolysis resistance is superior to that of a polyester polyol not containing an ether group.

The ether group-including polyester polyol applicable in the present invention may be obtained by mixing and reacting a polyfunctional carboxylic acid compound, a polyfunctional alcohol compound, and a polytetramethylene ether glycol (PTMG). However, in the present invention, by adjusting the type of the polyfunctional carboxylic acid compound and the polyfunctional alcohol compound and/or a hydroxyl value of the polytetramethylene ether glycol, and a use amount of the materials, it is possible to obtain an ether group-including polyester polyol having a hydroxyl value in a range of 11.22 to 224.11 mgKOH/g.

Specifically, non-limiting examples of the polyfunctional carboxylic acid compound may include, for example, di- or tri-carboxylic acid compounds such as adipic acid, sbelic acid, abelic acid, azelic acid, and sebacic acid, dodecanedioic acid, and trimesic acid, which may be used alone or in combination of two or more.

A content of such a polyfunctional carboxylic acid compound may be in a range of 20 to 56 parts by weight with respect to 100 parts by weight of the ether group-including polyester polyol.

In addition, non-limiting examples of the polyfunctional alcohol compound may include, for example, diols such as ethylene glycol, butanediol, and hexanediol; and triols such as trimethylol propane, which may be used alone or in combination of two or more.

A content of the polyfunctional alcohol compound may be in a range of 10 to 40 parts by weight with respect to 100 parts by weight of the ether group-including polyester polyol.

In addition, the polytetramethylene ether glycol (PTMG) may have a hydroxyl value in a range of 56.1 to 561.0 mgKOH/g.

A content of such polytetramethylene ether glycol may be in a range of 10 to 40 parts by weight with respect to 100 parts by weight of the ether group-including polyester polyol.

The aforementioned ether group-including polyester polyols may be prepared by various methods known in the art. For example, a polyfunctional carboxylic acid compound, a polyfunctional alcohol compound, and a polytetramethylene ether glycol are mixed, and then the temperature is raised from room temperature to a firstly raised temperature in a range of 140 to 160°C (e.g., 150°C), the firstly raised temperature (e.g., 150°C) is then maintained for 60 to 120 minutes, the firstly raised temperature (e.g., 150°C) is then raised to a secondarily raised temperature in a range of 210 to 230°C (e.g., 220°C), the secondarily raised temperature (e.g., 220°C) is then maintained for 10 to 120 minutes, a vacuum atmosphere in a range of 650 to 760 mmHg is then created at the maintained secondarily raised temperature (e.g., 220°C), and when an acid value is 1 mgKOH /g or less, the reaction is terminated, and accordingly, an ether group-including polyester polyol having a hydroxyl value in a range of 11.22 to 224.11 mgKOH/g may be prepared.

Optionally, the polyol according to the present invention may further include at least one selected from the group consisting of a polyether polyol, a polylactone polyol, and a polycarbonate polyol, in addition to the polyester polyol described above.

In one example, the polyol according to the present invention may include a polyester polyol; and at least one (hereinafter, "non-polyester polyol") of a polyether polyol, a polylactone polyol, and a polycarbonate polyol.

In the present invention, non-limiting examples of the applicable polyether polyol may include, for example, polypropylene glycol and polytetramethylene glycol, non-limiting examples of the applicable polylactone polyol may include, for example, polycaprolactone diol and the like, and non-limiting examples of the applicable polycarbonate polyol may include, for example, polycarbonate diol and the like.

In one example, the polyol may include at least one of a polyester polyol; and at least one selected from the group consisting of a polyether polyol, a polycaprolactone diol, and a polycarbonate diol.

(b) Diisocyanate

In the thermoplastic polyurethane composition according to the present invention, the diisocyanate is a material constituting a hard segment of the thermoplastic polyurethane.

In one example, the diisocyanate may include a highly crystalline diisocyanate. The highly crystalline diisocyanate may constitute a highly crystalline hard segment of the thermoplastic polyurethane. In the present invention, the highly crystalline diisocyanate refers to an isocyanate as a component of TPU that may impart high crystallinity properties of the TPU.

The highly crystalline diisocyanate applicable in the present invention is not particularly limited as long as it is a diisocyanate that is commonly used for constituting a highly crystalline hard segment of a thermoplastic polyurethane in the art, for example, a $C_{2n}$ chain aliphatic diisocyanate (where n is an integer in a range of 4 to 10), specifically hexamethylene diisocyanate (HDI) and the like, but the present invention is not limited thereto. These may be used alone or two or more may be used in combination. That is, as a highly crystalline diisocyanate, hexamethylene diisocyanate may be included alone or in combination with other diisocyanates.

Optionally, the diisocyanate according to the present invention may further include at least one selected from the group consisting of an alicyclic diisocyanate and an aromatic diisocyanate, in addition to the highly crystalline diisocyanate.

In one example, the diisocyanate may include a highly crystalline diisocyanate; and at least one selected from the group consisting of an alicyclic diisocyanate and an aromatic diisocyanate.

Non-limiting examples of the alicyclic diisocyanate applicable in the present invention may include, for example, dicyclohexylmethane diisocyanate (H12MDI), isophorone diisocyanate (IPDI), and the like, which may be used alone or in combination of two or more.

In addition, non-limiting examples of the aromatic diisocyanate may include, for example, diphenyl methane diisocyanate (MDI), toluene diisocyanate (TDI), xylylene diisocyanate (XDI), and the like, which may be used alone or in combination of two or more.

In the thermoplastic polyurethane composition of the present invention, a content of the diisocyanate may be in a range of 10 to 95 parts by weight, specifically 10 to 80 parts by weight, more specifically 20 to 55 parts by weight with respect to 100 parts by weight of the polyol. If the content of diisocyanate is in the above-mentioned range, it is possible to improve the molding process workability and emotional quality of the molded product without degradation of the heat aging resistance and light aging resistance of the molded product, and it is also possible to minimize or substantially prevent whitening (e.g., stress whitening) of the molded product.

Herein, when the diisocyanate of the present invention includes a highly crystalline diisocyanate, a content of the highly crystalline diisocyanate may be in a range of 10 to 37 parts by weight, specifically 15 to 30 parts by weight, more specifically 18 to 25 parts by weight with respect to 100 parts by weight of the polyol. If the content of the highly crystalline diisocyanate is less than 10 parts by weight, a melting point is low due to a small number of hard segment domains in a molecular structure of the thermoplastic polyurethane, and accordingly, the heat aging resistance and light aging resistance may be lowered, and degradation of the molding process workability, scratch resistance and life scratch resistance may be caused. On the other hand, if the content of the highly crystalline diisocyanate is more than 37 parts by weight, the hard segment domain is widened, thus increasing the melting point, but the hardness is excessively high, and thus it may cause degradation of emotional quality of the molded product.

The highly crystalline diisocyanate may be used together with an alicyclic diisocyanate and/or an aromatic diisocyanate in various use ratios. However, when a ratio $[(W_2+W_3)/W_1]$ of a total content $(W_2+W_3)$ of the alicyclic diisocyanate and the aromatic diisocyanate to a content $(W_1)$ of the highly crystalline diisocyanate is in a range of 0.05 to 1.2, specifically in a range of 0.09 to 1, more specifically, in a range of 0.1 to 0.8, it is possible to substantially prevent whitening problem of the molded product, lower the hardness of the molded product, and increase softness (e.g., ductility) to improve the emotional quality. Here, $W_2$ means the content of the alicyclic diisocyanate, and $W_3$ means the content of the aromatic diisocyanate.

(c) Aromatic chain extender

In the thermoplastic polyurethane composition according to the present invention, the aromatic chain extender is a material constituting the hard segment while extending molecules of the thermoplastic polyurethane, and includes at least one selected from the group consisting of hydroquinone bis (2-hydroxyethyl) ether (HQEE) and hydroxyethyl resorcinol (HER).

A content of the aromatic chain extender may be in a range of 5 to 35 parts by weight, specifically 8 to 30 parts by weight, and more specifically 13 to 25 parts by weight, with respect to 100 parts by weight of the polyol. If the content of the aromatic chain extender is less than 5 parts by weight, the melting point of the thermoplastic polyurethane may be low due to a small number of hard segments, thus causing degradation of the heat aging resistance and light aging resistance, and if the content of the aromatic chain extender is more than 35 parts by weight, it may cause degradation of emotional quality of the molded product due to an excess of the hard segment.

A ratio ($W_1/W_4$) of the content ($W_1$) of the highly crystalline diisocyanate to the content ($W_4$) of the aromatic chain extender may be in a range of 0.4 to 2.5, specifically in a range of 0.7 to 2.0, and more specifically in a range of 0.9 to 1.5. When the ratio ($W_1/W_4$) of the content of the highly crystalline diisocyanate to the content of the aromatic chain extender is less than 0.4, the hardness may increase and the emotional quality of the molded product may be lowered, and when the ratio ($W_1/W_4$) of the content of the highly crystalline diisocyanate to the content of the aromatic chain extender is more than 2.5, the melting point, crystallinity and hardness of the thermoplastic polyurethane may be lowered, workability cycle during processing may increase, and thus the processing cost and the defect rate may increase.

(d) Additive

The thermoplastic polyurethane composition of the present invention may further include, if necessary, an additive commonly used in the art within a range that does not significantly impair the purpose and effect of the present invention.

The additive may include, for example, antioxidants, UV absorbers, hindered amine-based light stabilizers (HALS), hydrolysis stabilizers, pigments, and the like, and specific examples thereof are as generally known in the art, and thus omitted herein.

A content of the additive is not particularly limited, and may be, for example, in a range of 0.01 to 10 parts by weight with respect to 100 parts by weight of the polyol. Specifically, with respect to 100 parts by weight of the polyol, the antioxidant may be in a range of 0.1 to 2 parts by weight, the UV absorber may be in a range of 0.1 to 5 parts by weight, the HALS may be in a range of 0.1 to 5 parts by weight, and the hydrolysis resistance may be in a range of 0.05 to 5 parts by weight, respectively.

Since the thermoplastic polyurethane composition according to the present invention described above has high crystallinity of the hard segment in a final thermoplastic polyurethane structure and has a high melting point of the final thermoplastic polyurethane, it is possible to manufacture a molded product, e.g., a surface material for a vehicle interior material, that is excellent in scratch resistance and life scratch resistance (nail), as well as abrasion resistance, durability (e.g., heat aging resistance, light aging resistance, moisture aging resistance, etc.), appearance quality, moldability, emotional quality (e.g., surface touch feeling, embossing quality, etc.), airbag deployment performance, and safety performance (e.g., fogging, etc.).

The present invention further provides a method for preparing the above-described thermoplastic polyurethane composition.

In one example, the method for preparing a thermoplastic polyurethane composition according to the present invention may include: polymerizing a thermoplastic polyurethane by polymerizing a polyol including a polyester polyol, a diisocyanate, and an aromatic chain extender; aging the thermoplastic polyurethane; pulverizing the aged thermoplastic polyurethane; and adding an additive to the pulverized thermoplastic polyurethane and then performing extrusion. However, in the above-described preparing method according to the present invention, steps of each process may be modified or selectively mixed as necessary.

Hereinafter, a method for preparing a thermoplastic polyurethane composition according to the present invention will be described for each process step.

First, a polyol including a polyester polyol, a crystalline diisocyanate, and an aromatic chain extender are mixed, and a polymerization reaction is performed thereon to polymerize a thermoplastic polyurethane (hereinafter, "S100") .

In one example, this S100 may include: first mixing a polyol including a polyester polyol, an aromatic chain extender, and optionally an additive (e.g., one or more of an antioxidant, a hydrolysis resistance, etc.) at a temperature in a range of 80 to 150°C at a speed of 100 to 500 rpm for 1 to 10 minutes to prepare a first mixture (S110) ; and second mixing the first mixture with a diisocyanate at a speed of 100 to 1000 rpm for 1 to 10 minutes, and then performing a polymerization reaction thereon (S120).

The description of the polyol including the polyester polyol, the crystalline diisocyanate, the aromatic chain extender, and the additive is the same as that described in the aforementioned thermoplastic polyurethane composition, and thus is omitted.

Next, the thermoplastic polyurethane obtained in S100 is aged (hereinafter, "S200").

This S200 may be performed at a temperature in a range of 60 to 140°C for 1 to 48 hours.

Subsequently, the thermoplastic polyurethane aged in S200 is pulverized (e.g., ground) at room temperature (e.g., 20±5°C) (hereinafter, "S300").

The pulverizer applicable in S300 is not particularly limited as long as it is generally known in the art.

Next, an additive is added to the thermoplastic polyurethane pulverized in S300, mixed and extruded (hereinafter, "S400").

The extrusion in S400 may be performed at a temperature in a range of 100 to 250°C. Through S400, the thermoplastic polyurethane may be molded into various shapes, for example, in the form of pellets.

Examples of the additive used in this step may include, but are not limited to, UV absorbers, hindered amine-based light stabilizers, and the like. The description of these additives is as described in the thermoplastic polyurethane composition, and thus is omitted.

The present invention also provides a molded product manufactured using the above-described thermoplastic polyurethane composition.

As an example, the present invention may provide a surface material for a vehicle interior material manufactured using a thermoplastic polyurethane composition. In this case, the thermoplastic polyurethane composition has high crystallinity and high melting point, and thus it may be formed into a thin film when molded according to a powder slush molding (PSM) method, and it is also possible to reduce cooling energy and shorten cycle time to increase productivity. In addition, the thermoplastic polyurethane composition has excellent demolding properties, and thus it is possible to reduce an application amount and cycle of a mold release agent, and it is also excellent in shape retention properties during demolding and storage. In addition, dissimilar to PVC, the thermoplastic polyurethane composition has excellent shape retention properties after molding, and thus loading and foaming processes may be easily performed in manufacturing of the surface material. In addition, the thermoplastic polyurethane composition may improve the scratch resistance, life scratch resistance, abrasion resistance, appearance quality, moldability, heat aging resistance, and light aging resistance of the surface material.

A thickness of the surface material may be in a range of 0.1 to 1.5 mm, specifically, in a range of 0.5 to 1.2 mm.

If necessary, the thermoplastic polyurethane composition may be granulated in the form of colored pellets or a powder having a diameter of 500 $\mu$m or less to be processed into a molded product having a predetermined shape.

A method for manufacturing the molded product (e.g., the surface material for vehicle (e.g., car) interior materials) is not particularly limited as long as it is commonly known in the art, for example, in molding graining (IMG) method, male or female vacuum molding method, and powder slush molding (PSM) method and the like, but the present invention is not limited thereto.

Hereinafter, the present invention will be described in more detail through embodiments. These embodiments are only for illustrating the present invention in more detail, and the present invention is not limited thereto.

**<Preparation Example 1>: Preparation of polyester polyol**

After mixing 100 kg of adipic acid, 51 kg of 1,4-butylene glycol, and 59 kg of polytetramethylene ether glycol (PTMEG) (hydroxyl value: 448.8 mgKOH/g), the temperature was raised from room temperature to a firstly raised temperature 150°C, and the firstly raised temperature of 150°C was then maintained for 90 minutes. Next, after raising the temperature from 150°C to a secondarily raised temperature 220°C, the secondarily raised temperature of 220°C was then maintained for 30 minutes, a vacuum atmosphere of 720 mmHg was then created at the secondarily raised temperature, and when an acid value is 1.0 mgKOH/g or less, the reaction was terminated such that 180 kg of an ether group-including polyester polyol (condensation water: 12.29 %, hydroxyl value: 54.0 mgKOH/g) was prepared.

<Preparation example 2>

After mixing 100 kg of adipic acid and 72 kg of 1,4-butylene glycol, the temperature was raised from room temperature to a firstly raised temperature 150°C, and the firstly raised temperature of 150°C was then maintained for 90 minutes. Next, after raising the temperature from 150°C to a secondarily raised temperature 220°C, the secondarily raised temperature of 220°C was then maintained for 30 minutes, and then, a reaction was performed at the secondarily raised temperature and under a vacuum atmosphere of 720 mmHg, and when an acid value is 1.0 mgKOH/g or less, the reaction was terminated such that 140 kg of a polyester polyol (condensation water: 16.3 %, hydroxyl value: 56.0 mgKOH/g) which does not include an ether group was prepared.

**<Comparative preparation example 1>**

PTMEG 2000 [polytetramethylene ether glycol (PTMEG) (hydroxyl value: 55.9 mgKOH/g)] by BASF Co, Ltd. was used.

**<Embodiment 1>**

1-1. Preparation of thermoplastic polyurethane compositions

A thermoplastic polyurethane composition was prepared as follows by using each component according to the composition shown in Table 1 below.

Specifically, the ether group-including polyester polyol (hydroxyl value: 54.00 mgKOH/g) prepared in Preparation Example 1, HQEE, a primary antioxidant (Irganox1010, BASF), a hydrolysis resistance (Staboxol I, Rhein chemie) and a secondary antioxidant (Irgafos126) were firstly mixed at 120°C for 2 minutes. Then, hexamethylene diisocyanate (HDI) and isophorone diisocyanate (IPDI) were added thereto, and the mixture was secondarily mixed at a speed of 500 rpm for 3 minutes to obtain a thermoplastic polyurethane. Then, the thermoplastic polyurethane (TPU) was aged at 120°C for 6 hours. Next, the thermoplastic polyurethane was pulverized at room temperature to obtain a thermoplastic polyurethane in the form of a chip (e.g., flake) (hereinafter, "TPU chip"). The obtained TPU chip was put into a blender together with a hindered amine-based light stabilizer (HALS) (Tinivin765, manufacturer: BASF) and a UV absorber (Zikasorb, supplier: ZIKO Co., Ltd.) and blended for at least 3 hours, and then was extruded at Barrel #1 150°C, Barrel #2~4 180°C, Barrel #5~8, dies 210°C, such that a first thermoplastic polyurethane composition in the form of pellets was prepared. In such a case, the obtained first thermoplastic polyurethane composition in the form of pellets had a melt flow index of 60 g/10 min according to the ISO1133 at a temperature of 200°C and a load of 2.16 kg. After mixing the prepared first thermoplastic polyurethane composition in the form of pellets with 1 part by weight (1 kg) of a black-based pigment, it was extruded at Barrel #1 160°C, Barrel #2~4 1850°C, Barrel #5~8 205°C, dies 195°C, such that a final thermoplastic polyurethane composition in the form of pellets was prepared. In Table 1 below, the unit of each component is kg.

1-2. Preparing of vehicle interior surface material

A powder having an average particle size of 220 $\mu$m was prepared using the final thermoplastic polyurethane composition in the form of pellets prepared in Embodiment 1-1.

Next, a surface material molded into a predetermined shape was manufactured using the powder prepared as above according to the powder slush molding (PSM) method. Specifically, after putting a mold in an oven (temperature: 300°C) and heating it to 230°C, the prepared powder is filled in a powder box, and the mold is taken out from the oven and fastened to a powder slush molding apparatus to couple the mold and the powder box. The coupled mold and powder box was then rotated left and right (left 360 degrees twice, right 360 degrees twice), and then the mold was separated from the powder box. The separated mold was cooled by dipping in water at 23°C for 1 minute, and then a surface material was demolded from the mold.

**<Embodiments 2 to 5, Comparative Examples 1 to 4>**

Thermoplastic polyurethane compositions and vehicle interior surface materials of Embodiments (Emb.) 2 to 5 and Comparative Examples (Comp. Ex.) 1 to 4 were prepared in the same manner as in Embodiment 1, except for using each component according to the composition shown in Table 1, respectively.

[Table 1]

| | | Embodiment | | | | | Comparative Example | | | |
|---|---|---|---|---|---|---|---|---|---|---|
| | | 1 | 2 | 3 | 4 | 5 | 1 | 2 | 3 | 4 |
| Polyol | Prep Ex. 1 | 100 | 100 | 100 | 100 | - | 100 | 100 | 100 | - |
| | Prep Ex. 2 | - | - | - | - | 100 | | | | |
| | Comp. Prep Ex. 1 | - | - | - | - | - | - | - | - | 100 |
| Aromatic chain extender | HQEE | 17.97 | 17.97 | 8.985 | 16.01 | 17.51 | - | - | - | 17.53 |
| | HER | - | - | 8.985 | - | - | - | - | - | - |
| | 1.4BO D | - | - | - | - | - | 7.01 | - | - | - |
| | 1.6HG | - | - | - | - | - | - | 9.54 | - | - |
| | DEG | - | - | - | - | - | - | - | 8.43 | - |

(continued)

|  |  | Embodiment |  |  |  |  | Comparative Example |  |  |  |
|---|---|---|---|---|---|---|---|---|---|---|
|  |  | 1 | 2 | 3 | 4 | 5 | 1 | 2 | 3 | 4 |
| Diisocya nate | HDI | 20.36 | 20.36 | 20.36 | 21.01 | 20.28 | 18.46 | 18.90 | 18.71 | 20.28 |
|  | IPDI | 2.99 | 2.99 | 2.99 | 0.00 | 2.98 | 2.71 | 2.78 | 2.75 | 2.98 |
| Irganox 1010 |  | 0.42 | 0.42 | 0.42 | 0.41 | 0.42 | 0.38 | 0.39 | 0.39 | 0.42 |
| Irgafos 126 |  | 0.28 | 0.28 | 0.28 | 0.27 | 0.28 | 0.26 | 0.26 | 0.26 | 0.28 |
| Tinuvin 765 |  | 0.71 | 0.71 | 0.71 | 0.69 | 0.70 | 0.64 | 0.66 | 0.65 | 0.70 |
| Zikasorb |  | 0.71 | 0.71 | 0.71 | 0.69 | 0.70 | 0.64 | 0.66 | 0.65 | 0.70 |
| 1) 1.4BDO: 1,4-butanediol<br>2) 1.6HG: 1,6-hexanediol<br>3) DEG: diethylene glycol<br>4) HDI: hexamethylene diisocyanate<br>5) IPDI: isophorone diisocyanate | | | | | | | | | | |

**<Experimental Example 1>**

A melt flow index (MFI) for the first thermoplastic polyurethane composition in the form of pellets prepared in Embodiments 1 to 5 and Comparative Examples 1 to 4, respectively, was measured under conditions of a temperature of 200°C and a load of 2.16 kg according to the ISO 1133 test method, and the results are shown in Table 2 below.

[Table 2]

| Item | Emb. 1 | Emb. 2 | Emb. 3 | Emb. 4 | Emb. 5 | Comp Ex.1 | Comp Ex.2 | Comp Ex.3 | Comp. Ex. 4 |
|---|---|---|---|---|---|---|---|---|---|
| MFI (g/10min) | 60 | 62 | 63 | 58 | 56 | 59 | 59 | 57 | 59 |

**<Experimental Example 2>: molding evaluation**

For the surface materials prepared in Embodiments 1 to 5 and Comparative Examples 1 to 4, respectively, molding evaluation was performed as follows, and the results are shown in Tables 3 and 4, respectively.

(1) Appearance quality

ⓐ Shape Retention: whether a shape of each surface material was maintained was visually observed.

ⓑ Appearance such as pinholes: the presence or absence of pinholes on the surface of each surface material was visually observed.

ⓒ Gloss deviation: 60° gloss deviation for each part of each surface material was measured three times using a gloss meter (BYK-Gardner micro-TRI-gloss), and an average value thereof is shown in Tables 3-4.

(2) Moldability

ⓐ Whether not molded: portions that are not molded on each surface material were visually observed.

ⓑ Demolding properties: during demolding of the surface material from the mold, demolding properties of each surface material was observed, and evaluated as follows.

- 1: completely in close contact with the mold, and demolding is impossible by hand.

- 2: demolding is possible by hand, but deformation (tear, elongation, etc.) of the specimen appearance occurs

- 3: demolding is possible by hand without appearance deformation, but it is slow and requires relatively high force.

- 4: demolding is possible without relatively high force (requires greater force compared to #5)

- 5: easily demolded with fingertips

[Table 3]

| | | Emb. 1 | Emb. 2 | Emb. 3 | Emb. 4 | Emb. 5 |
|---|---|---|---|---|---|---|
| Appearance | Shape retention | Good | Good | Good | Good | Good |
| | Pinhole | No abnormality | No abnormality | No abnormality | No abnormality | No abnormality |
| | Gloss deviation | 10.2 | 10.3 | 10.2 | 10.2 | 10.3 |
| | | No abnormality | No abnormality | No abnormality | No abnormality | No abnormality |
| Moldability | Portions not molded | None | None | None | None | None |
| | Demolding properties | 5 | 4 | 4.5 | 5 | 5 |

[Table 4]

| | | Comp Ex.1 | Comp Ex.2 | Comp Ex.3 | Comp. Ex. 4 |
|---|---|---|---|---|---|
| Appearance | Shape retention | Good | Good | Shrinkage | Good |
| | Pinhole | No abnormality | No abnormality | No abnormality | No abnormality |
| | Gloss deviation | 10.3 | 10.2 | 10.6 | 10.2 |
| | | No abnormality | No abnormality | Large/high gloss | No abnormality |
| Moldability | Portions not molded | None | None | None | None |
| | Demolding properties | 3 | 4 | 1.5 | 4 |

As may be seen from Tables 3 and 4, the surface materials of Embodiments 1 to 5 were overall superior in terms of appearance quality and moldability as compared to Comparative Examples 1 to 4.

As described above, it was appreciated that the thermoplastic polyurethane composition including an aromatic chain extender such as HQEE and HER according to the present invention may be prepared into a surface material having overall excellent appearance quality and moldability.

<Experimental Example 4>: Physical property evaluation

The surface materials prepared in Embodiments 1 to 5 and Comparative Examples 1 to 4 were evaluated for physical properties as follows, and the results are shown in Tables 6 and 7.

(1) Specific gravity: specific gravity of each surface material was measured by a water displacement method according to the ASTM D 792 test method.
(2) Hardness: hardness of each surface material was measured with a Shore A hardness meter according to the ASTM D 2240 test method.

(3) Tensile strength (kgf/cm$^2$): tensile strength of each surface material was measured using an apparatus manufactured by Instron according to the ASTM D 412 test method. In such a case, a load was 5 kN, a specimen was a dumbbell No. 3 type, and a tensile speed was set to 200 m/min.

(4) Scratch resistance: after placing a weight of 300 g on a scraper (manufactured by SUS 403, diameter: 0.3 mm), and scratching a surface of the surface material with the scraper once, the surface of the surface material was visually observed to evaluate the scratch resistance of the surface material. In such a case, the appearance evaluation was classified into 5 grades as follows according to the scratch recognition of the surface.

** Scratch Resistance Rating **

Grade 5: No visible damage to the surface.
Grade 4: Recognized slight surface damage.
Grade 3: Surface damage is slightly recognized but not severe.
Grade 2: Recognized surface damage.
Grade 1: Significantly visible damage to the surface.

(5) Life-scratch property: when the surface of the surface material was scratched with a fingernail at a high speed, the surface appearance of the surface material was visually observed to evaluate the life scratch property of the surface material. Appearance evaluation was classified into 5 grades as follows according to the level of scratch recognition on the surface.

** Life Scratchability Rating **

Grade 5: No visible damage to the surface.
Grade 4: Recognized slight surface damage.
Grade 3: Surface damage is slightly recognized but not severe.
Grade 2: Recognized surface damage.
Grade 1: Significantly visible damage to the surface.

(6) Heat aging resistance: After aging the surface material at 120°C for 500 hours using an oven, an initial gloss ($G_1$) and a post-aging gloss ($G_2$) of the surface material were measured with a known gloss changer, respectively, and then a gloss change rate was calculated based on the following equation 1, and a color difference ($\Delta E$) of the surface material was measured using a color-difference meter (X-rite 8200).

[Equation 1]

$$\text{Gloss change rate (\%)} = \frac{(G_2 - G_1)}{G_1} \times 100$$

(In Equation 1,

G1 is the initial gloss of the surface material, the gloss before aging in the oven,
G2 is the gloss after aging of the surface material).

(7) Light aging resistance: a gloss change rate and a difference in color difference of the surface material (specimen) were measured using an accelerated light resistance tester, Atlas CI 4000 Xenon Arc Weather-O-meter. Herein, a total of 126 MJ/m$^2$ was tested under the test conditions of a wavelength band of 300 to 400 nm, a light intensity of 70 W/m$^2$, and a specimen surface temperature of 89°C.

(8) Moisture aging resistance: after leaving the surface material for 31 days at a temperature of 50 ± 5°C and a relative humidity of 95 ± 3 % using a thermo-hygrostat, a change in appearance of the surface material was visually observed. Herein, the blooming phenomenon refers to a change in appearance due to whitening or surface lamination of foreign substance which may occur when additives, internal unreacted raw materials, or oligomers migrate to a surface layer.

(9) Water immersion blooming resistance: the same part of the surface materials is cut into 4 cm × 4 cm, with care not to leave fingerprints, thereby preparing one specimen. Next, the one specimen was placed in a 1ℓ polyethylene (PE) barrel and immersed in an ion-exchanged water, and the PE barrel was sealed and then left in a thermo-hygrostat at 50±2°C for 96 hours. Next, after taking out the specimen from the PE barrel, the specimen was dried for 24 hours under conditions of 23±2°C and 50±5 % RH. Then, an initial specimen and a test-finished specimen were placed on a black background paper, respectively, and a change in blooming of the test-finished specimen compared to the initial specimen was visually compared and observed to evaluate the water immersion blooming resistance of the surface material. In such a case, the determination of water immersion blooming resistance was classified as shown in Table 5 below.

[Table 5]

| Grade | Local blooming change | Overall blooming change |
|---|---|---|
| Grade 1 | None | None |
| Grade 2 | less than 10 % of the total area | Slight distribution over entire surface (Slight level) |
| Grade 3 | More than 10 % to less than 20 % of the total area | Normal distribution over entire surface (White is observable) |
| Grade 4 | More than 20 % to less than 30 % of the total area | Severe distribution over entire surface (Visible color change) |
| Grade 5 | More than 30 % to less than 40 % of the total area | White foreign matter over entire surface |

(10) Abrasion resistance (weight loss) (mg): abrasion resistance of the surface material was evaluated by the Taber abrasion test specified in the ASTM D 4060 test method. In such a case, a wear wheel used in the test was H18, a load was 1 kg, a preliminary wear was 100 times, and a rotation speed was 60 rpm.

(11) Fogging (%): After cutting the surface material to prepare a 10±2g circular specimen, the circular specimen was left in an oil bath at 100°C for 5 hours, and then a haze of a glass plate located 160 mm upward from the specimen was measured with a hazemeter and recorded as a fogging value.

[Table 6]

| | | Size | Emb. 1 | Emb. 2 | Emb. 3 | Emb. 4 | Emb. 5 |
|---|---|---|---|---|---|---|---|
| Specific gravity | | - | 1.137 | 1.135 | 1.128 | 1.137 | 1.138 |
| Hardness (Shore A) | | < 90 | 78 | 77 | 78 | 80 | 77 |
| Tensile strength (kgf/cm$^2$) | | > 80 | 121 | 105 | 125 | 131 | 133 |
| Scratch resistance (Gr.) | | $\geq 3$ | 5 | 4 | 4.5 | 5 | 5 |
| Life scratch resistance (Gr.) | | $\geq 3$ | 4.5 | 3.5 | 4 | 4.5 | 4.5 |
| Heat aging resistance | Gloss change rate (%) | $\leq 40$ | 20 | 30 | 28 | 13 | 18 |
| | Color difference ($\triangle$E) | $\leq 2.00$ | 0.3 | 0.38 | 0.37 | 0.44 | 0.65 |
| Moisture aging resistance | Gloss change rate (%) | $\leq 40$ | 30 | 35 | 35 | 22 | 30 |
| | Color difference ($\triangle$E) | $\leq 2.00$ | 0.75 | 0.7 | 0.68 | 0.87 | 0.78 |
| Moisture resistance | | No abnormality | No abnormality | No abnormality | No abnormality | No abnormality | No abnormality |
| Water immersion blooming resistance (Gr.) | | $\leq 2.00$ | 1 | 1 | 1 | 1 | 1 |
| Abrasion resistance (mg) | | - | 20 | 35 | 28 | 18 | 22 |
| Fogging (%) | | $\leq 3$ | 0.5 | 1.3 | 0.8 | 1.1 | 1 |

[Table 7]

| | Size | Comp. Ex. 1 | Comp. Ex. 2 | Comp. Ex. 3 | Comp. Ex. 4 |
|---|---|---|---|---|---|
| Specific gravity | - | 1.127 | 1.128 | 1.121 | 1.124 |
| Hardness (Shore A) | < 90 | 76 | 78 | 76 | 77 |
| Tensile strength (kgf/cm$^2$) | > 80 | 121 | 82 | 145 | 123 |
| Scratch resistance (Gr.) | ≥ 3 | 3 | 3 | 2 | 3 |
| Life scratch resistance (Gr.) | ≥ 3 | 3 | 2.5 | 1 | 3 |
| Heat aging resistance | Gloss change rate (%) | ≤ 40 | 25 | 25 | 160 | 22 |
| | Color difference (ΔE) | ≤ 2.00 | 0.3 | 0.44 | 0.35 | 2.2 |
| Moisture aging resistance | Gloss change rate (%) | ≤ 40 | 50 | 35 | 200 | 31 |
| | Color difference (ΔE) | ≤ 2.00 | 0.75 | 0.8 | 1.5 | 2.5 |
| Moisture resistance | No abnormality | Whitened | Whitened | No abnormality | Whitened |
| Water immersion blooming resistance (Gr.) | ≤ 2.00 | 4 | 5 | 2 | 3 |
| Abrasion resistance (mg) | - | 45 | 45 | 160 | 45 |
| Fogging (%) | ≤ 3 | 0.7 | 1 | 1.2 | 1.6 |

According to Tables 6 and 7, the surface materials of Embodiments 1 to 5 were superior to the surface materials of Comparative Examples 1 to 4 in terms of scratch resistance and life scratch resistance (nails). In addition, in terms of the abrasion resistance test, the surface materials of Embodiments 1 to 5 had a low weight loss of 20 to 35 mg, whereas the surface materials of Comparative Examples 1 to 4 had a large weight loss of 45 to 100 mg. In particular, the surface material of Embodiment 1 was grade 5 in scratch resistance, and grade 4.5 in life-scratch resistance, and had abrasion resistance (weight loss) of 20 mg, which was overall excellent.

In addition, in terms of the heat aging resistance, the surface material of Comparative Example 3 had a gloss change rate of more than 40 %, which did not satisfy the specification. Furthermore, in terms of the light aging resistance, the surface materials of Comparative Examples 1 and 3 had a gloss change rate of more than 40 %, which did not satisfy the specification. On the other hand, the surface materials of Embodiments 1 to 5 had a gloss change rate of 40 % or less in terms of the heat aging resistance and light aging resistance, respectively, thus satisfying the specification.

In addition, in terms of the moisture aging resistance, the surface materials of Comparative Examples 1, 2, and 4 had a whitening issue, whereas the surface materials of Embodiments 1 to 5 had no abnormality in appearance. In addition, the surface materials of Embodiments 1 to 5 were all excellent in terms of water immersion blooming resistance performance, having Grade 1. On the other hand, the surface materials of Comparative Examples 1 to 4 had low water immersion blooming resistance performance of Grade 2 or higher, and in particular, the surface materials of Comparative Examples 1 and 2 had water immersion blooming resistance performance of Grades 4 to 5.

As described above, it was appreciated that the thermoplastic polyurethane composition including an aromatic chain extender such as HQEE and HER according to the present invention may be manufactured into a surface material that is excellent in overall properties such as scratch resistance, life scratch resistance, abrasion resistance, long-term durability (e.g., heat aging resistance, light aging resistance), non-blooming performance, and fogging.

**Claims**

1. A thermoplastic polyurethane composition for a vehicle interior surface material comprising:

   a polyol comprising a polyester polyol;
   a diisocyanate; and
   an aromatic chain extender,
   wherein the aromatic chain extender comprises at least one selected from the group consisting of hydroquinone bis (2-hydroxyethyl) ether (HQEE) and hydroxyethyl resorcinol (HER) .

2. The thermoplastic polyurethane composition for a vehicle interior surface material of claim 1, comprising, with respect to 100 parts by weight of the polyol,

   10 to 95 parts by weight of the diisocyanate, and
   5 to 35 parts by weight of the aromatic chain extender.

3. The thermoplastic polyurethane composition for a vehicle interior surface material of claim 1, wherein the diisocyanate comprises a highly crystalline diisocyanate.

4. The thermoplastic polyurethane composition for a vehicle interior surface material of claim 3, wherein the highly crystalline diisocyanate is hexamethylene diisocyanate (HDI).

5. The thermoplastic polyurethane composition for a vehicle interior surface material of claim 3, wherein the diisocyanate further comprises at least one selected from the group consisting of alicyclic diisocyanate and an aromatic diisocyanate.

6. The thermoplastic polyurethane composition for a vehicle interior surface material of claim 5, wherein the alicyclic diisocyanate comprises at least one selected from the group consisting of dicyclohexylmethane diisocyanate (H12MDI) and isophorone diisocyanate (IPDI).

7. The thermoplastic polyurethane composition for a vehicle interior surface material of claim 5, wherein the aromatic diisocyanate comprises at least one of diphenyl methane diisocyanate (MDI), toluene diisocyanate (TDI) and xylylene diisocyanate (XDI).

8. The thermoplastic polyurethane composition for a vehicle interior surface material of claim 5, wherein a ratio $[(W_2+W_3)/W_1]$ of a total content $(W_2+W_3)$ of the alicyclic diisocyanate and the aromatic diisocyanate to a content $(W_1)$ of the highly crystalline diisocyanate is in a range of 0.05 to 1.2.

9. The thermoplastic polyurethane composition for a vehicle interior surface material of claim 3, wherein a ratio $(W_1/W_4)$ of a content $(W_1)$ of the highly crystalline diisocyanate to a content $(W_4)$ of the aromatic chain extender is in a range of 0.4 to 2.5.

10. A vehicle interior surface material prepared by using the thermoplastic polyurethane composition according to any of claims 1 to 9.

11. A method for preparing a thermoplastic polyurethane composition for a vehicle interior surface material, the method comprising:

    polymerizing a thermoplastic polyurethane by polymerizing a polyol comprising a polyester polyol, a diisocyanate, and an aromatic chain extender;
    aging the thermoplastic polyurethane;
    pulverizing the aged thermoplastic polyurethane; and
    adding an additive to the pulverized thermoplastic polyurethane and then performing extrusion.

12. The method of claim 11, wherein polymerizing of the thermoplastic polyurethane comprises:

    first mixing the polyol comprising the polyester polyol and the aromatic chain extender at a temperature in a range of 80 to 150°C at a speed of 100 to 500 rpm for 1 to 10 minutes to prepare a first mixture; and

second mixing the first mixture with the diisocyanate at a speed of 100 to 1000 rpm for 1 to 10 minutes, and performing polymerization.

13. The method of claim 11, wherein aging of the thermoplastic polyurethane is performed at a temperature in a range of 60 to 140°C for 1 to 48 hours.

## INTERNATIONAL SEARCH REPORT

| International application No. |
| --- |
| **PCT/KR2020/003784** |

**A. CLASSIFICATION OF SUBJECT MATTER**

*C08G 18/42(2006.01)i, C08G 18/08(2006.01)i, C08L 75/04(2006.01)i*

According to International Patent Classification (IPC) or to both national classification and IPC

**B. FIELDS SEARCHED**

Minimum documentation searched (classification system followed by classification symbols)

C08G 18/42; B29C 41/18; B33Y 80/00; C08G 18/16; C08G 18/28; C08G 18/32; C08G 18/66; C08G 18/72; C08G 18/75; C08G 18/08; C08L 75/04

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)

eKOMPASS (KIPO internal) & Keywords: polyester polyol, diisocyanate, chain extender, Hydroquinone bis(2-hydroxyethyl)ether (HQEE), Hydroxyethyl Resorcinol(HER)

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2016-0138169 A (LUBRIZOL ADVANCED MATERIALS, INC.) 02 December 2016 See claims 1, 9-13; paragraphs [0035]-[0074], [0104]. | 1-4,10 |
| Y | | 5-9,11-13 |
| Y | KR 10-2011-0008883 A (KOLON INDUSTRIES, INC.) 27 January 2011 See claims 1-2; paragraphs [0021]-[0026], [0053]-[0054]; table 1. | 5-9 |
| Y | JP 2000-127184 A (TOKAI CHEM IND LTD.) 09 May 2000 See paragraphs [0012]-[0017], [0024]-[0025]. | 7,9 |
| Y | KR 10-2017-0013099 A (HYUNDAI MOTOR COMPANY et al.) 06 February 2017 See claims 14-17; paragraphs [0049]-[0055], [0061]-[0063]. | 11-13 |
| A | KR 10-2018-0029246 A (LUBRIZOL ADVANCED MATERIALS, INC.) 20 March 2018 See claims 1, 9; paragraphs [0038]-[0068]. | 1-13 |

☐ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 07 JULY 2020 (07.07.2020) | **08 JULY 2020 (08.07.2020)** |

| Name and mailing address of the ISA/KR | Authorized officer |
| --- | --- |
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

**INTERNATIONAL SEARCH REPORT**
Information on patent family members

International application No.
**PCT/KR2020/003784**

| Patent document cited in search report | Publication date | Patent family member | Publication date |
|---|---|---|---|
| KR 10-2016-0138169 A | 02/12/2016 | CA 2943620 A1 | 01/10/2015 |
| | | CN 106459349 A | 22/02/2017 |
| | | EP 3122797 A1 | 01/02/2017 |
| | | TW 201542683 A | 16/11/2015 |
| | | US 2017-0174818 A1 | 22/06/2017 |
| | | WO 2015-148248 A1 | 01/10/2015 |
| KR 10-2011-0008883 A | 27/01/2011 | None | |
| JP 2000-127184 A | 09/05/2000 | None | |
| KR 10-2017-0013099 A | 06/02/2017 | CN 106397720 A | 15/02/2017 |
| | | DE 102015225456 A1 | 02/02/2017 |
| | | KR 10-1745116 B1 | 08/06/2017 |
| | | US 2017-0029554 A1 | 02/02/2017 |
| | | US 9855688 B2 | 02/01/2018 |
| KR 10-2018-0029246 A | 20/03/2018 | AU 2016-295142 A1 | 01/02/2018 |
| | | BR 112018000815 A2 | 04/09/2018 |
| | | CA 2992713 A1 | 26/01/2017 |
| | | CN 108026243 A | 11/05/2018 |
| | | CR 20180019 A | 08/03/2018 |
| | | EP 3325531 A1 | 30/05/2018 |
| | | IL 256815 D0 | 29/03/2018 |
| | | JP 2018-521767 A | 09/08/2018 |
| | | MX 2018000578 A | 07/05/2018 |
| | | SG 10202000397S A1 | 30/03/2020 |
| | | TW 201706324 A | 16/02/2017 |
| | | US 2018-0208704 A1 | 26/07/2018 |
| | | WO 2017-015073 A1 | 26/01/2017 |

Form PCT/ISA/210 (patent family annex) (January 2015)

**EP 3 957 668 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100508655
- KR 100493231